# EUROPEAN PATENT SPECIFICATION

(11) **EP 4 028 450 B1**
(45) Date of publication and mention of the grant of the patent: **08.11.2023**
(21) Application number: 20768565.2
(22) Date of filing: 08.09.2020
(51) Int. Cl.: C08G 73/14

(54) **POLYAMIDE-IMIDE POLYMER AND PROCESS FOR ITS MANUFACTURE**
POLYAMIDIMID POLYMER UND VERFAHREN ZU SEINER HERSTELLUNG
POLYAMIDE-IMIDE POLYMÈRE ET SON PROCÉDÉ DE FABRICATION

(30) Priority: 09.09.2019 US 201962897476 P
(43) Date of publication of application: 20.07.2022
(73) Proprietor: Solvay Specialty Polymers USA, LLC., Alpharetta, GA 30005-3914 (US)
(72) Inventor: FLORES, Joel, Alpharetta, GA 30004 (US); JEOL, Stéphane, 69230 Saint-Genis-Laval (FR)
(74) Representative: Lederer & Keller Patentanwälte Partnerschaft mbB
(86) International application number: PCT/EP2020/074993
(87) International publication number: WO 2021/048075

(56) References cited:
- KR-B1- 101 713 996
- US-A- 3 661 863
- US-A1- 2014 072 745
- MAITI MANORANJAN ET AL: "Polymers from renewable resources. part 5. synthesis and properties of a polyamideimide from rosin", JOURNAL OF MACROMOLECULAR SCIENCE : PART A - CHEMISTRY, MARCEL DEKKER, NEW YORK, NY, US , vol. A20, no. 1 30 June 1983 (1983-06-30), pages 109-121, XP009524339, ISSN: 0022-233X, DOI: 10.1080/00222338308060567 Retrieved from the Internet: URL:http://www.tandfonline.com/doi/abs/10. 1080/00222338308060567 [retrieved on 2006-12-06]

## Description

### Technical Field

The present invention relates to a polyamide-imide (PAI) polymer and to a process for its manufacture.

### Background Art

Polyamide-imides (PAI) are high performance polymers possessing outstanding thermal, chemical and mechanical properties and are, therefore, suitable for demanding applications where high mechanical strength, stiffness and low friction in combination with high temperature, corrosion, and wear resistance are required. For these reasons, they are widely used in the aerospace and automotive industries, insulations, coatings, solvent resistant membranes and electronic devices.

PAI are polymers that contain both amide and imide functionalities in the backbone. Hence, PAI polymers tend to exhibit hybrid properties of polyamides and polyimides. The increased rigidity of the imide group imparts better hydrolytic, chemical and thermal stability to the polymers as well as superior mechanical properties especially to polymers based on aromatic monomers. Most commercial PAl polymers are indeed aromatic, typically based on trimellitic acid, trimellitic anhydride or trimellitic acid halide, and on aromatic diamines.

During the PAI preparation process, an imide is formed from the reaction between two neighboring carboxylic acid groups (or derivatives thereof, such as acid halides, acid anhydrides, esters) and primary amine-containing molecules. An amic acid is formed initially, which closes into an imide ring upon further removal of a molecule of water.

The imidization reaction generally requires high temperatures, especially for PAI polymers based on aromatic monomers. The use of high temperatures, however, leads to crosslinking side reactions, which result in PAI polymers with limited processability or even in thermoset-like structures. While said PAl polymers are chemically stable, their use is limited for certain applications due to their low flow during a melt processing, their thermal intractability in conventional processing methods (i.e. their low capability of being melt processed) and their low solubility.

Several attempts have been made to improve these properties, while at the same time maintaining the good thermal and mechanical performances of said PAl polymers, notably by grafting the polymers, blending them with other types of polymers and forming composites with additives and inorganic fibers.

Other attempts to improve the solubility and the processability of said PAl polymers involved the incorporation into their polymeric chains of flexible linkages and alicyclic units. For example, Journal of Polymer Science, Part A: Polymer Chemistry 2018, 56, 1782-1786, discloses a polyamide-imide based on CTA and bis-(trifluoromethyl)benzidine. Although said polyamide-imide shows improved solubility in several solvents, it has a glass transition temperature (Tg) above 300°C which makes said polymer difficult to be melt processed.

US 2011/160407 discloses a PAI polymer obtained by reacting at least one aromatic organic compound having carboxyl groups, at least one diamine compound and optionally at least one diacid compound. The diamine compound may be aromatic, arylaliphatic, aliphatic and cycloaliphatic. This document more precisely describes PAI polymers based on hexamethylenediamine (HMD) as the diamine compound and trimellitic acid, pyromellitic acid or trimetllitic anhydride as the aromatic organic compound. However, being aromatic, the imide linkage of said PAI imparts colors to the polymer (yellow to orange to red). US2014/072745 discloses polyamide imide based on cycloaliphatic acid (triacid), cycloaliphatic diamine and lactam. Based on the process and the formula of claim 17, the amine moiety of the diamine will not form an imide structure with the 1,2 dicarboxylic group of the triacid cycloaliphatic compound. Such compound reacts with the lactam in a first step. After formation of the compound as in claim 17, it will react with the diamine.

None of the above-listed documents describes a PAI polymer based on a cycloaliphatic acid component, for example a cycloaliphatic tricarboxylic acid, and on a cycloaliphatic diamine.

### Summary of invention

In a first aspect, the present invention relates to a polyamide-imide (PAI) polymer comprising recurring units according to any of formulae (I) and (II): 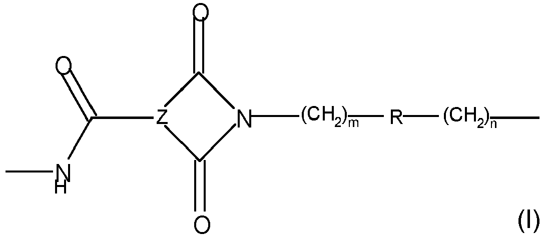 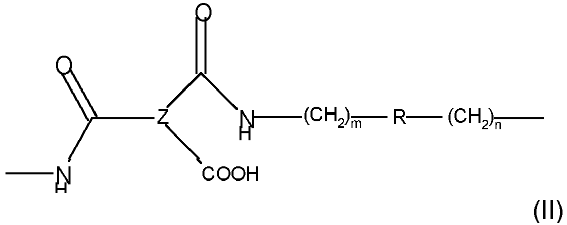 wherein:
- Z is a cycloaliphatic moiety selected from the group consisting of substituted or unsubstituted, monocyclic or polycyclic groups having 5 to 50 carbon atoms, preferably 6 to 18 carbon atoms;
- R is a divalent cycloaliphatic moiety selected from the group consisting of substituted or unsubstituted, monocyclic or polycyclic groups having 5 to 50 carbon atoms, preferably 6 to 20 carbon atoms, and
- m and n are, independently from each other, integers from 0 to 10, preferably from 1 to 5, more preferably from 1 to 3.

In a second aspect, the present invention relates to a process for preparing the PAI polymer as identified above, the process comprising reacting:
a) at least one cycloaliphatic acid component according to any of formulae (IX) and (X): 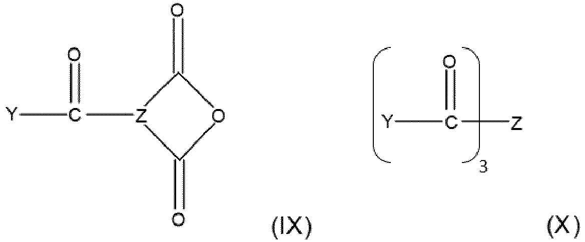 wherein:
   - Z is a cycloaliphatic moiety selected from the group consisting of substituted or unsubstituted, monocyclic or polycyclic groups having 5 to 50 carbon atoms, preferably 6 to 18 carbon atoms;
   - Y is ORₐ, with Rₐ being H or an alkyl, preferably an alkyl having 1 to 5 carbon atoms, and
   - at least two Y(C=O) are attached to 2 adjacent carbon atoms of Z in formula (X), and
b) at least one cycloaliphatic diamine according to formula (XI):

   H₂N-(CH₂)ₘ-R-(CH₂)ₙ-NH₂ (XI)

   wherein:
   - R is a divalent cycloaliphatic moiety selected from the group consisting of substituted or unsubstituted, monocyclic or polycyclic groups having 5 to 50 carbon atoms, preferably 6 to 20 carbon atoms, and
   - m and n are, independently from each other, integers from 0 to 10, preferably from 1 to 5, more preferably from 1 to 3.

In a third aspect, the present invention relates to a polymer composition comprising the PAI polymer as identified above.

In a forth aspect, the present invention relates to an article comprising said PAI polymer or said polymer composition.

The Applicant has surprisingly found that the PAI polymer according to the invention shows an interesting set of properties, such as low and controlled branching. The PAI polymer according to the invention exhibits enhanced solubility, melt-processability and moldability, while maintaining good thermal and mechanical properties, such as a high glass transition temperature (Tg). In particular, the PAI polymer according to the invention can be easily processed using conventional polymer processing technologies such as extrusion and injection molding. Furthermore, the PAI polymer according to the invention can be easily converted into films and other articles.

The Applicant has also interestingly found that the article comprising the PAI polymer or the polymer composition according to the invention is transparent and colorless and shows a low yellowness index.

### Detailed description of the invention

In the present description, unless otherwise indicated, the following terms are to be meant as follows.

The term "cycloaliphatic moiety" means an organic group which contains at least one aliphatic ring and does not contain aromatic rings. The cycloaliphatic moiety can be substituted with one or more straight or branched alkyl or alkoxy groups and/or halogen atoms and/or can comprise one or more heteroatoms, like nitrogen, oxygen and sulfur, in the ring.

The term "alkyl", as well as derivative terms such as "alkoxy", include within their scope straight chains, branched chains and cyclic moieties. Examples of alkyl groups are methyl, ethyl, 1-methylethyl, propyl, 1,1-dimethylethyl, and cyclo-propyl. Unless specifically stated otherwise, each alkyl group may be unsubstituted or substituted with one or more substituents selected from but not limited to hydroxy, sulfo, C₁-C₆ alkoxy, C₁-C₆ alkylthio, provided that the substituents are sterically compatible and the rules of chemical bonding and strain energy are satisfied.

The term "halogen" or "halo" includes fluorine, chlorine, bromine and iodine, with fluorine being preferred.

### POLYAMIDE-IMIDE (PAI) POLYMER

An object of the present invention is a PAI polymer comprising recurring units according to any of formulae (I) and (II): 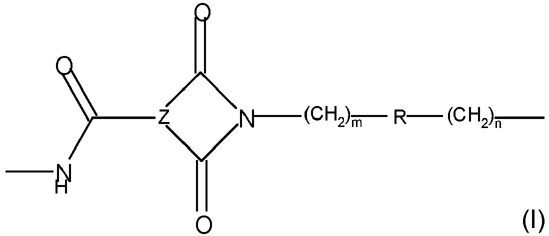 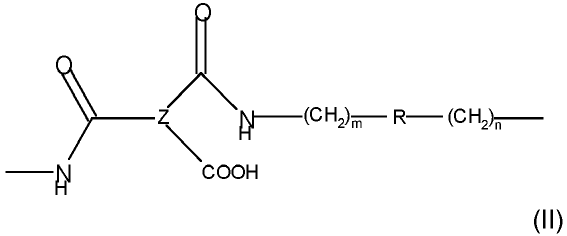 wherein:
Z is a cycloaliphatic moiety selected from the group consisting of substituted or unsubstituted, monocyclic or polycyclic groups having 5 to 50 carbon atoms, preferably 6 to 18 carbon atoms;
R is a divalent cycloaliphatic moiety selected from the group consisting of substituted or unsubstituted, monocyclic or polycyclic groups having 5 to 50 carbon atoms, preferably 6 to 20 carbon atoms, and
m and n are, independently from each other, integers from 0 to 10, preferably from 1 to 5, more preferably from 1 to 3.

Preferably, Z is a cycloaliphatic moiety comprising from one to four aliphatic rings. In case Z comprises more than one aliphatic ring, i.e. two or more aliphatic rings, said aliphatic rings may be condensed or may be bridged together either directly or by the following bridges: -O-,-CH₂-, - C(CH₃)₂-, -C(CF₃)₂-, -(CF₂)_{q}-, with q being an integer from 1 to 5. The term "directly" means that the aliphatic rings are connected together through a bond.

Preferably, Z is a trivalent cycloaliphatic moiety selected from the group consisting of moieties of formulae (III-A) to (III-D): 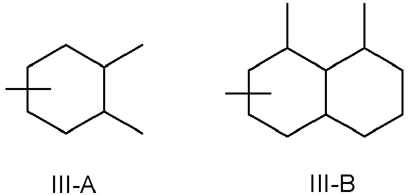 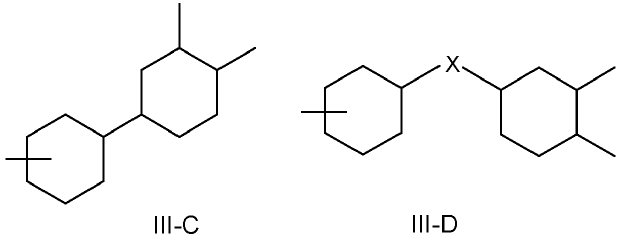 and corresponding substituted structures, with X being -O-, -CH₂-, - C(CH₃)₂-, -C(CF₃)₂-, -(CF₂)q-, with q being an integer from 1 to 5.

Preferably, R is a cycloaliphatic moiety comprising from one to four aliphatic rings. In case R comprises more than one aliphatic ring, i.e. two or more aliphatic rings, said aliphatic rings may be condensed or may be bridged together either directly or by the following bridges: -O-,-S-,-SO₂-, -CH₂-,-C(CF₃)₂-, -(CF₂)q-, with q being an integer from 1 to 5. The term "directly" means that the aliphatic rings are connected together through a bond.

Preferably, R is a divalent cycloaliphatic moiety selected from the group consisting of moieties of formulae (IV-A) to (IV-C): 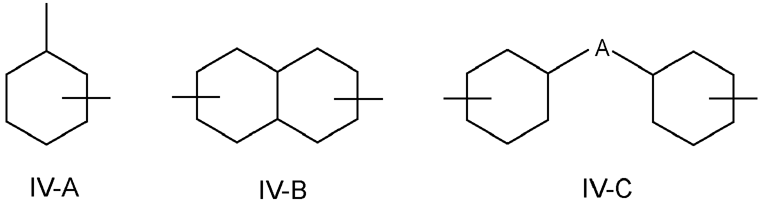 and corresponding substituted structures, with A being selected from the group consisting of -O-, -S-, -SO₂-, CH₂-, -C(CF₃)₂-, -(CF₂)_{q}-, with q being an integer from 1 to 5.

The PAI polymer of the invention preferably comprises at least 5 mol.%, more preferably at least 20 mol%, even more preferably at least 40 mol%, most preferably at least 60 mol% of recurring units of formula (I), based on the total number of moles of recurring units in the PAI polymer.

The PAI polymer of the invention preferably comprises at most 10 mol.%, more preferably at most 5 mol%, even more preferably at most 1 mol%, of recurring units of formula (II), based on the total number of moles of recurring units in the PAI polymer.

According to an embodiment, in addition to the recurring units of formula (I) and (II), the PAI polymer of the invention further comprises recurring units according to any of formulae (V) and (VI): 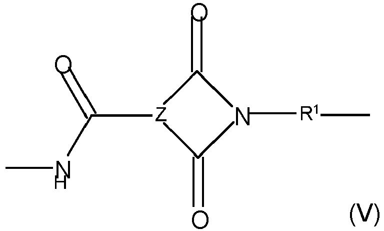 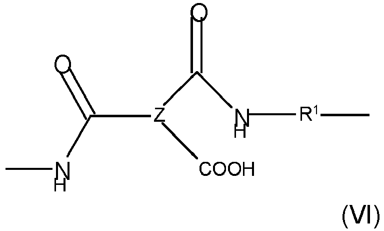 wherein R¹ is a divalent aliphatic hydrocarbon radical, preferably comprising from 2 to 18 carbon atoms, more preferably from 4 to 12 carbon atoms, even more preferably from 6 to 10 carbon atoms. Said aliphatic hydrocarbon radicals include straight and branched chains, preferably straight hydrocarbon chains.

Preferably, said PAI polymer comprises at most 50 mol.%, more preferably at most 40 mol%, even more preferably at most 35 mol%, of recurring units according to any of formulae (V) and (VI), based on the total number of moles of recurring units according to formulae (I), (II), (V) and (VI) in the PAI polymer.

According to an embodiment, in addition to the recurring units of formulae (I) and (II), the PAI polymer of the invention further comprises polyamide recurring units according to any of formulae (VII) and (VIII): 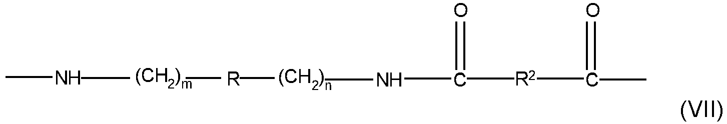 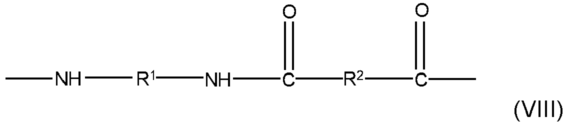 wherein R, R¹, m and n are as defined above and R² is a divalent hydrocarbon radical, in particular a divalent aliphatic, cycloaliphatic or aromatic hydrocarbon radical, preferably comprising from 4 to 18 carbon atoms. Preferred examples of aliphatic radicals are alkylene radicals having from 4 to 16 carbon atoms, preferably from 4 to 12 carbon atoms, more preferably from 4 to 10 carbon atoms. Preferred examples of cycloaliphatic radicals are 1,4- and 1,3-cyclohexylene radicals. Preferred examples of aromatic radicals are radicals of benzene and naphtalene, which may be substituted or unsubstituted.

Preferably, said PAI polymer comprises at most 20 mol.%, more preferably at most 10 mol%, even more preferably at most 5 mol%, of recurring units according to any of formulae (VII) and (VIII), based on the total number of moles of recurring units in the PAI polymer.

According to a preferred embodiment of the invention, the PAI polymer consist of, or consists essentially of, recurring units of formula (I) and recurring units of formula (II). The expression "consists essentially of" means that the PAI polymer comprises reccuring units of formula (I) and recurring units of formula (II), as well as less than 10 mol.%, preferably less than 5 mol.%, more preferably less than 3 mol.%, even more preferably less than 1 mol.%, of other recurring units distinct from recurring units of formulae (I) and (II), based on the total number of moles of recurring units in the PAI polymer.

According to an even more preferred embodiment, the PAI polymer consists of, or consists essentially of, recurring units of formula (I). The expression "consists essentially of' means that the PAI polymer comprises recurring units of formula (I), as well as less than 10 mol.%, preferably less than 5 mol.%, more preferably less than 3 mol.%, even more preferably less than 1 mol.%, of other recurring units distinct from recurring units of formula (I), based on the total number of moles of recurring units in the PAI polymer.

In a preferred embodiment, the recurring units according to formula (I) have formula (Ia):

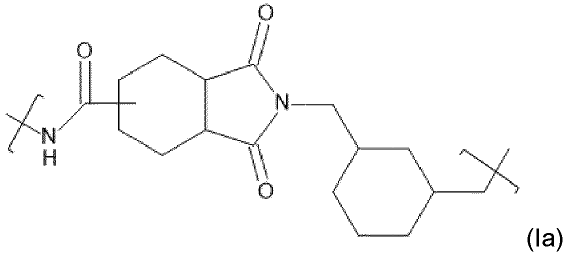

In a preferred embodiment, the recurring units according to formula (II) have formula (Ila):

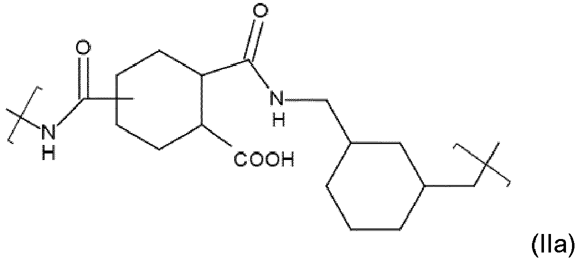

Preferably, said PAI polymer has a glass transition temperature (Tg) of at least 100°C, more preferably of at least 120°C, even more preferably of at least 140°C, most preferably of at least 150°C, as determined by DSC according to ASTM D3418.

Preferably, said PAI polymer has a glass transition temperature (Tg) of at most 250°C, more preferably of at most 240°C, even more preferably of at most 230°C, most preferably of at most 220°C, as determined by DSC according to ASTM D3418.

Preferably, said PAI polymer has a number average molecular weight (Mn) of at least 5,000 g/mol, more preferably of at least 10,000 g/mol, even more preferably of at least 15,000 g/mol, as determined by gel permeation chromatography (GPC) using a fluorinated solvent, 2 HFIP gel columns and UV-vis/refractive index detectors.

Preferably, said PAI polymer has a number average molecular weight (Mn) of at most 50,000 g/mol, more preferably of at most 45,000 g/mol, even more preferably of at most 40,000 g/mol, as determined by gel permeation chromatography (GPC) using a fluorinated solvent, 2 HFIP gel columns and UV-vis/refractive index detectors.

Advantageously, said PAI polymer is soluble in a variety of solvents, notably in hexafluoro-2-propanol, o-cresol, sulfuric acid 98% and dimethylformamide.

The PAI polymer according to the invention can be processed using conventional polymer processing technologies such as extrusion and injection molding for subsequent forming after melting.

Furthermore, the PAI polymer according to the invention can be easily converted into films and other articles. Since the PAI polymer of the invention is soluble in a variety of organic solvents, films can advantageously be made from casting a solution containing the PAI polymer and then evaporating the solvent, following standard processes which are known to the person skilled in the art. In particular, said films can be made by dissolving the PAI polymer in a solvent to obtain a solution, casting the solution on a substrate and finally evaporating the solvent.

Said PAl polymer can be used in a large number of applications, in particular in the manufacture of yarns, fibers or filaments, or films, or in the forming of articles by injection molding, extrusion or extrusion/blow molding. It can in particular be used in engineered plastic compositions.

### PROCESS FOR PREPARING SAID POLYAMIDE-IMIDE POLYMER

Another object of the present invention is a process for preparing the PAI polymer as defined above, said process comprises reacting:
a) at least one cycloaliphatic acid component according to any of formulae (IX) and (X): 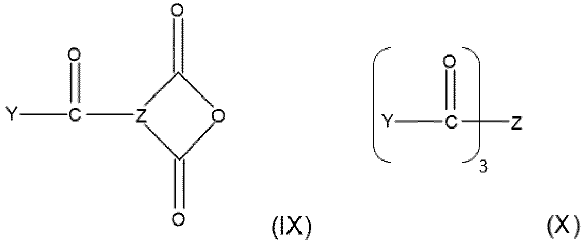 wherein:
   Z is a cycloaliphatic moiety selected from the group consisting of substituted or unsubstituted, monocyclic or polycyclic groups having 5 to 50 carbon atoms, preferably 6 to 18 carbon atoms;
   Y is ORₐ, with Rₐ being H or an alkyl, preferably an alkyl having 1 to 5 carbon atoms, and
   at least two Y(C=O) are attached to 2 adjacent carbon atoms of Z in formula (X), and
b) at least one cycloaliphatic diamine according to formula (XI):

   H₂N-(CH₂)ₘ-R-(CH₂)ₙ-NH₂ (XI)

   wherein:
   R is a divalent cycloaliphatic moiety selected from the group consisting of substituted or unsubstituted, monocyclic or polycyclic groups having 5 to 50 carbon atoms, preferably 6 to 20 carbon atoms, and
   m and n are, independently from each other, integers from 0 to 10, preferably from 1 to 5, more preferably from 1 to 3.

Preferred examples of Z and R are as defined above in relation to the PAI polymer of formulae (I) and (II).

In a preferred embodiment, the cycloaliphatic acid component is according to any of formulae (IXa) and (Xa):

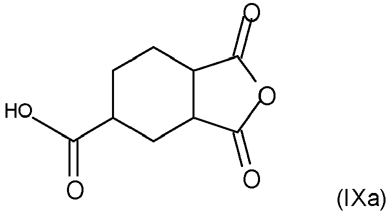

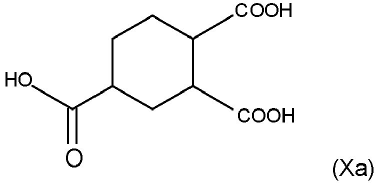

According to this embodiment, the process of the present invention comprises:
- reacting the cycloaliphatic acid component according to formula (IXa) and at least one cycloaliphatic diamine,
- reacting the cycloaliphatic acid component according to formula (Xa) and at least one cycloaliphatic diamine, or
- reacting a mixture of the cycloaliphatic acid components according to formulae (IXa) and (Xa) and at least one cycloaliphatic diamine.

The cycloaliphatic diamine is preferably selected from the group consisting of 1,3-bis(aminomethyl)cyclohexane, 1,4-bis(aminomethyl)cyclohexane, isophorone diamine, 1,4-diaminocyclohexane, 1,3-diaminocyclohexane, 4,4'-methylenebis(cyclohexylamine), 4,4'-methylene-bis(2-methylcyclohexylamine).

According to an embodiment, the reaction mixture further comprises at least one aliphatic diamine of formula (XII):

H₂N-R¹-NH₂ (XII)

wherein R¹ is as defined above.

Said aliphatic diamine is preferably selected from the group consisting of putrescine, cadaverine, hexamethylenediamine, 2,2,4-trimethylhexamethylenediamine, 2,4,4-trimethylhexamethylenediamine, 1,9-diaminononane, 2-methyl-1,8-diaminooctane, dodecamethylenediamine.

For the sake of brevity, the term "diamino component" as used below include both cycloaliphatic diamine(s) and aliphatic diamine(s).

Preferably, said diamino component comprises at least 50 mol.%, more preferably at least 65 mol%, even more preferably at least 80 mol.% of cycloaliphatic diamine(s), based on the total number of moles of the diamine component involved in the process. Even more preferably, the diamine component consists of, or consists essentialy of, cycloaliphatic diamine(s). The expression "consists essentially of' means that the diamine component comprises cycloaliphatic diamine(s), as well as less than 10 mol.%, preferably less than 5 mol.%, more preferably less than 3 mol.%, even more preferably less than 1 mol.%, of aliphatic diamine(s), based on the total number of moles of diamines in the reaction mixture.

According to an embodiment, the reaction mixture further comprises at least one diacid component or derivative thereof.

The expression "derivative thereof' is intended to denote whichever derivative which is susceptible of reacting in polycondensation conditions to yield an amide bond. Examples of amide-forming derivatives include acyl groups, for example aliphatic acyl and aromatic acyl groups, substituted or unsubstituted. Examples of these acyl groups are formyl, acetyl, propionyl, butyryl, isobutyryl, valeryl, isovaleryl, pivaloyl, benzoyl, toluoyl and xyloyl.

This additional diacid component may be aliphatic, cycloaliphatic or aromatic. Said diacid component comprises at least two carboxylic acid moieties -COOH and optionally comprises one or several heteroatoms, said heteroatom(s) being preferably selected among N, S and O.

The diacid component preferably presents the following formula (XII):

HOOC-R²-COOH (XII)

wherein R² is a divalent hydrocarbon radical, in particular a divalent aliphatic, cycloaliphatic or aromatic hydrocarbon radical, preferably comprising from 4 to 18 carbon atoms. Preferred examples of aliphatic radicals are alkylene radicals having from 4 to 16 carbon atoms, preferably from 4 to 12 carbon atoms, more preferably from 4 to 10 carbon atoms. Preferred examples of cycloaliphatic radicals are 1,4- and 1,3-cyclohexylene radicals. Preferred examples of aromatic radicals are radicals of benzene and naphthalene, which may be substituted or unsubstituted.

The diacid component is preferably selected from the group consisting of adipic acid, azelaic acid, sebacic acid, dodecanedioic acid, isophthalic acid, terephthalic acid, 2,6-naphthalene dicarboxylic acid, 4,4'-dibenzoic acid, 5-hydroxyisophthalic acid, 5-sulfophthalic acid, 1,3-cyclohexanedicarboxylic acid, 1,4-cyclohexanedicarboxylic acid, and mixtures thereof.

A chain-limiter or end-capping agent can be added in the reaction mixture to control the molecular weight. A chain-limiter or end-capping agent is a molecule that has only one reactive site with amine and/or carboxylic acid. Examples of end-capping agents are monoamines, such as benzylamine and 1-hexaneamine, and monocarboxylic acids, such as acetic acid, propionic acid, benzoic acid, phthalic acid or anhydride.

According to a preferred embodiment, said process comprises reacting said at least one cycloaliphatic acid component, said at least one cycloaliphatic diamine, optionally said at least one aliphatic diamine and optionally said at least one diacid component by melt polymerization, and further comprises a step of maintaining the reaction mixture in a state of uniform liquid during melt polymerization at a temperature of at least 200°C.

The term "melt polymerization" means that the reaction mixture is maintained in a state of uniform liquid during polymerization at a temperature of at least 200°C.

Within the context of the present invention, the term "state of uniform liquid" means that the reaction mixture remains in a fluidized state without any solidification and/or precipitation of the resulting PAI polymer.

During melt polymerisation, the reaction mixture is constantly heated to increasing temperatures such that the PAI polymer under preparation is in a molten state. The minimal temperature at which the reaction mixture should be heated can generally be determined based on the melting or softening point of the PAI polymer being prepared. The melting or softening point of the PAI polymer being prepared may vary over polymerisation time based on the quantity of reactants involved in the reaction, notably the quantity of limiting reactant if for example one of the reactants is progressively added in the reaction mixture. In this case, the melting or softening point of the PAI polymer being prepared can be determined based on the complete conversion of the limiting reactant monomer. As the limiting reactant may be added sequentially in the reaction mixture, several temperature rises/increments may be necessary in order to prepare the PAI polymer of the present invention. Each step of the polymerization process is then conducted at a temperature not less than the melting or softening point of the PAI polymer being produced.

The process of melt polymerization is advantageously conducted in the absence of an organic solvent. In other words, advantageously, said process is organic-solvent-free, meaning that the polymerization medium does not comprise an organic solvent or comprises an amount of organic solvent which is less than 1 wt.%, less than 0.5 wt.% or even less than 0.2 wt%, based on the total weight of the reaction mixture. Said process may however use water.

According to different embodiments, said process of melt polymerization is carried out in the absence of added water or in the presence of an amount of added water less than 50 wt.%, preferably less than 40 wt.%, more preferably less than 30 wt.%, even more preferably less than 15 wt.%, most preferably less than 5 wt.%, based on the total weight of the reaction mixture.

Accordingly, the polymerization medium can be an aqueous solution comprising the above identified components (i.e. said at least one cycloaliphatic acid component, said at least one cycloaliphatic diamine, optionally said at least one aliphatic diamine and optionally said at least one diacid component), or a liquid comprising the said components. Preferably, the polymerization medium comprises water as solvent, since this facilitates the stirring of the medium and thus its homogeneity.

According to various embodiments, either the cycloaliphatic acid component or the diamine component is added sequentially, progressively or continuously in the reaction mixture.

Preferably, the reaction mixture contains said cycloaliphatic acid component and said diamine component at an equivalent ratio ranging from 0.8 to 1.2 preferably from 0.9 to 1.1 more preferably from 0.95 to 1.05, even more preferably from 0.97 to 1.03.

When the process of the invention employs a diacid component, the diacid component and the diamine component can be introduced, at least in part, in the form of a salt of the diacid and diamine components.

The PAI polymer is generally obtained by polycondensation of the cycloaliphatic acid component(s), the cycloaliphatic diamine(s), optionally the aliphatic diamine(s) and optionally the diacid component(s) to form polyamide-imide chains with formation of the elimination product, in particular water. Preferably, the water generated during the process is evaporated, for example by fractional distillation using a condenser, at a pressure between 1 mbar and 30 bar.

The reaction mixture is preferably maintained in a state of uniform liquid during melt polymerization at a temperature of at least 200°C, preferably from 215°C to 300°C, in order to evaporate the elimination product, in particular the water (present initially in the polymerization medium and/or formed during the polycondensation), while preventing any formation of solid phase in order to prevent the mixture from setting solid.

The process of melt polymerization may be carried out under pressure, for at least some parts of the process. In these instances, a maximum pressure of 20 bar, preferably a maximum pressure of 10 bar, more preferably a maximum pressure of 3 bar, is used. The end of the process is anyhow preferably performed at low pressure (vacuum or atmospheric pressure), in order to drive the reaction towards completion and remove more easily the water formed during the reaction.

The process of melt polymerization can be carried out in equipment made from materials inert toward the above identified components (i.e. said at least one cycloaliphatic acid component, said at least one cycloaliphatic diamine, optionally said at least one aliphatic diamine and optionally said at least one diacid component). In this case, the equipment is chosen in order to provide enough contact between said components and so that the removal of volatile reaction products, notably the water, is feasible. Suitable equipment includes agitated reactors, extruders and kneaders. The reaction vessel is preferably equipped with stirring means, for example a rotating shaft.

Preferably, the order of introduction of the components into the reaction vessel during the process is as follows: water is added first, then the diamine component is charged and finally the cycloaliphatic acid component and the diacid component are added.

Preferably, an inert gas, such as nitrogen gas, is introduced into the reaction vessel to replace the atmosphere in the vessel. Preferably, the reaction vessel is purged with said inert gas both before and after charging all the above identified components. Preferably, a flow of inert gas is kept during the process.

### POLYMER COMPOSITION

Another object of the present invention is a polymer composition comprising the PAI polymer as defined above.

Preferably, the PAI polymer is present in the polymer composition in an amount of at least 10 wt.%, more preferably at least 15 wt.%, even more preferably at least 20 wt.%, most preferably at least 25 wt.%, based on the total weight of the polymer composition.

Preferably, the PAI polymer is present in the polymer composition in an amount of at most 99 wt.%, more preferably at most 95 wt.%, even more preferably at most 80 wt.%, most preferably at most 60 wt.%, based on the total weight of the polymer composition.

According to an embodiment of the invention, the PAI polymer is present in the polymer composition in an amount ranging from 10 to 70 wt.%, preferably from 20 to 60 wt. %, based on the total weight of the polymer composition.

According to an embodiment of the invention, said polymer composition comprises at least one additional additive selected from the group consisting of reinforcing agents, colorants, dyes, pigments, lubricants, plasticizers, flame retardants, nucleating agents, heat stabilizers, light stabilizers, antioxidants, processing aids, fusing agents, electromagnetic absorbers and combinations thereof.

Reinforcing agents, also referred to as reinforcing fillers or fibers, may be selected from the group consisting of fibrous reinforcing fillers, particulate reinforcing fillers and mixtures thereof. A fibrous reinforcing filler is considered herein to be a material having length, width and thickness, wherein the average length is significantly larger than both the width and the thickness. Generally, a fibrous reinforcing filler has an aspect ratio, defined as the average ratio between the length and the largest of the width and the thickness of at least 5, at least 10, at least 20 or at least 50.

Fibrous reinforcing fillers include glass fibers, carbon or graphite fibers, and fibers formed of silicon carbide, alumina, titania, boron and the like, and may include mixtures comprising two or more such fibers. According to an embodiment, said fibers are flat fibers. Non-fibrous reinforcing fillers include notably talc, mica, titanium dioxide, potassium titanate, silica, kaolin, chalk, alumina, mineral fillers, and the like.

According to this embodiment, the PAI polymer is advantageously mixed with said at least one additional additive. Preferably, mixing the PAI polymer and said at least one additional additive is carried out by dry blending and/or melt compounding. More preferably, mixing the polyamide (PA) and said at least one additional additive is carried out by melt compounding, notably in continuous or batch devices. Such devices are well known to those skilled in the art. Examples of suitable continuous devices are screw extruders. Preferably, melt compounding is carried out in a twin-screw extruder.

### ARTICLE

The present invention also relates to an article comprising said PAI polymer or said polymer composition.

The article according to the present invention is preferably a molded article. Preferably, said article is molded from the PAI polymer or the polymer composition comprising said PAl polymer using methods well known in the art, for example by methods including, but not limited to, injection molding, blow molding, rotomolding, compression molding or extrusion molding.

Should the disclosure of any patents, patent applications, and publications which are incorporated herein by reference conflict with the description of the present application to the extent that it may render a term unclear, the present description shall take precedence.

The invention will now be described with reference to the following examples, whose purpose is merely illustrative and not intended to limit the scope of the invention.

### Experimental section

### Materials

Cyclohexane-1,2,4-tricarboxylic acid-1,2-anhydride (CTA), available from Mitsubishi Gas Chemicals.
1,3-bis(aminomethyl)cyclohexane (1,3-BAC), available from Mitsubishi Gas Chemicals.
Hexamethylenediamine (HMDA), available from Ascend Performance Materials.
4,4'-methylenebis(cyclohexylamine) (PACM), available from Sigma-Aldrich.
Phosphorus acid, available from Sigma-Aldrich.

### Methods

### Thermal analyses

The thermal properties were determined using differential scanning calorimetry (DSC). DSC analyses were carried out on DSC Q200-5293 TA Instrument according to ASTM. Three scans were used for each DSC test: 1^{st} heating cycle to 300°C at 20.00°C/min; 1^{st} cooling cycle to 30.00°C at 20.00°C/min; 2^{nd} heating cycle to 300.00°C at 20.00°C/min. The glass transition temperature (Tg) was determined from the transition midpoint during the 2^{nd} heating cycle.

### GPC

Mn was measured by gel permeation chromatography (GPC).

### Solubility

A 5-mg sample of the PAI polymer was added into 5 ml of solvent. The resulting mixture was stirred at room temperature for 24 to 48 hours and any dissolution or softening of the sample was noted. If the sample was completely dissolved, it was considered soluble. If the sample did not show any change in appearance after 48 hours, it was considered insoluble. Solubility in hexafluoro-2-propanol (HFIP), o-cresol, sulfuric acid 98% and dimethylformamide (DMF) was tested.

### Yellowness testing

Films having a thickness of 0.1-0.2 mm were prepared in a hot-press (280°C, 2000 Ib-f). The yellowness index was measured on said films using a X-Rite Ci7800 spectrophotometer.

### Mechanical testing

PAI 1 polymer synthesized as described below was ground in a mill grinder and dried overnight at 120°C under vacuum. Then, it was injection molded into Type V tensile bars according to ASTM D3641, using a mold temperature of 140°C, a melt temperature of 290°C and an injection pressure of 6 bars. Mechanical tests were performed on injection molded test specimens with a gauge length of 0.3 inch using the Instron 5569 machine and according to ASTM D638 at 23.2 °C with 54.7% humidity. The notched Izod impact strength was determined by ASTM D256 using injection molded test specimens.

### Synthesis methods

### Polyamide-imide 1 (PAI 1)

CTA (53.9 g), 1,3-BAC (39.1 g), phosphorus acid (0.032 g) and deionized water (42 g) were charged into a 300-ml reactor. Then, the reactor was purged with nitrogen for 5 minutes and stirred, and the polymerization reaction was carried out by heating to 280°C within 2 hours. The steam generated was released upon reaching the target temperature. A vacuum was then applied to the reactor and the so obtained molten polymer was then held at this condition for another hour. Upon cooling, the polymer was taken out of the reactor and used for analyses.

### Polyamide-imide 2 (PAI 2)

CTA (55.6 g), 1,3-BAC (25.9 g), HMDA (11.7 g), phosphorus acid (0.032g) and deionized water (42 g) were charged into a 300-ml reactor. Then, the reactor was purged with nitrogen for 5 minutes and stirred, and the polymerization reaction was carried out by heating to 280°C within 2 hours. The steam generated was released upon reaching the target temperature. A vacuum was then applied to the reactor and the so obtained molten polymer was then held at this condition for another hour. Upon cooling, the polymer was taken out of the reactor and used for analyses.

### Polyamide-imide 3 (PAI 3)

CTA (50.7 g), PACM (27.1 g), HMDA (15.0 g), phosphorus acid (0.032 g) and deionized water (42 g) were charged into a 300-ml reactor. Then, the reactor was purged with nitrogen for 5 minutes and stirred, and the polymerization reaction was carried out by heating to 280°C within 2 hours. The steam generated was released upon reaching the target temperature. A vacuum was then applied to the reactor and the so obtained molten polymer was then held at this condition for another hour. Upon cooling, the polymer was taken out of the reactor and used for analyses.

### Results

Table 1 shows the glass transition temperature (Tg), the number average molecular weight (Mn), the yellowness index and the solubility results of PAI 1, PAI 2 and PAI 3 polymers prepared according to the invention.

Table 2 shows mechanical properties of PAI 1.

**Table 1**

| | PAl 1 | PAI 2 | PAI 3 |
|---|---|---|---|
| CTA (mol) | 100 | 100 | 100 |
| 1,3-BAC (mol) | 100 | 65 | - |
| HMDA (mol) | - | 35 | 50 |
| PACM (mol) | - | - | 50 |
| | | | |
| Tg [°C] | 176 | 150 | 160 |
| Mn [g/mol] | 21,290 | 34,240 | 19,160 |
| Yellowness index | 7.1 | 5.3 | 4.1 |
| Solubility in HFIP | soluble | soluble | soluble |
| Solubility in o-cresol | soluble | soluble | soluble |
| Solubility in sulphuric acid | soluble | soluble | soluble |
| Solubility in DMF | soluble | soluble | soluble |

**Table 2**

| | PAI 1 |
|---|---|
| CTA (mol) | 100 |
| 1,3-BAC (mol) | 100 |

| Mechanical properties | |
|---|---|
| Modulus of elasticity (MPa) | 3,220 |
| Tensile stress at yield (MPa) | 113 |
| Tensile elongation at yield (%) | 4.9 |
| Tensile stress at break (MPa) | 108 |
| Tensile elongation at break (%) | 5.5 |
| IZOD Unnotched impact (ft-lb/in) | 10.5 |

As evidenced in Table 1 above, high molecular weight PAI polymers based on CTA and different diamines (1,3-BAC, HMDA and PACM) were successfully prepared. Said PAl polymers show glass transition temperatures (Tg) ranging between 150 and 176°C; the Tg could easily be adjusted by changing the nature and quantity of the diamine component.

Said PAl polymers also show a very low yellowness index.

Moreover, these PAI polymers revealed to be soluble in several organic solvents, which indicates that they have low and controlled branching.

As evidenced in Table 2, PAI 1 was melt processed and parts were made by injection molding, which indicates that PAI 1 also exhibits melt-processability and moldability. PAI 1 also shows excellent mechanical properties, with a combination of high tensile modulus and strength.

## Claims

1. Polyamide-imide (PAI) polymer comprising recurring units according to any of formulae (I) and (II): 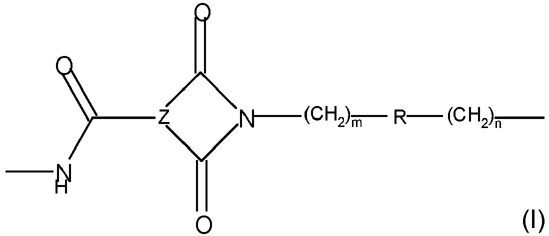 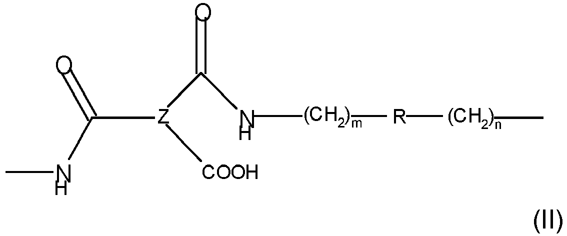 wherein:
- Z is a cycloaliphatic moiety selected from the group consisting of substituted or unsubstituted, monocyclic or polycyclic groups having 5 to 50 carbon atoms, preferably 6 to 18 carbon atoms;
- R is a divalent cycloaliphatic moiety selected from the group consisting of substituted or unsubstituted, monocyclic or polycyclic groups having 5 to 50 carbon atoms, preferably 6 to 20 carbon atoms, and
- m and n are, independently from each other, integers from 0 to 10, preferably from 1 to 5, more preferably from 1 to 3.

2. The PAI polymer according to claim 1, wherein Z comprises from one to four aliphatic rings, said aliphatic rings being condensed or bridged together either directly or by the following bridges: -O-,-CH₂-, -C(CH₃)₂-, -C(CF₃)₂-, - (CF₂)_{q}-, with q being an integer from 1 to 5, preferably Z is selected from the group consisting of moieties having formulae (III-A) to (III-D): 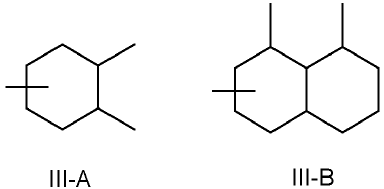 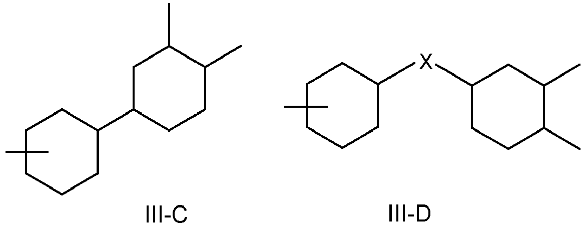 with X being selected from the group consisting of: -O-,-CH₂-, -C(CH₃)₂-, - C(CF₃)₂-, -(CF₂)_{q}-, with q being an integer from 1 to 5.

3. The PAI polymer according to any one of the previous claims, wherein R comprises from one to four aliphatic rings, said aliphatic rings being condensed or bridged together either directly or by the following bridges: -O-, -S-, -SO₂-, -CH₂-,-C(CF₃)₂-, -(CF₂)_{q}-, with q being an integer from 1 to 5, preferably R is selected from the group consisting of moieties having formulae (IV-A) to (IV-C): 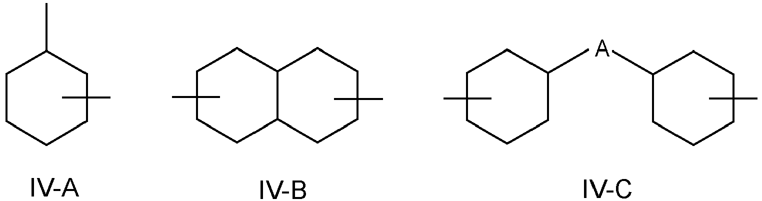 with A being selected from the group consisting of -O-, -S-, -SO₂-, CH₂-, - C(CF₃)₂-, - (CF₂)_{q}-, with q being an integer from 1 to 5.

4. The PAI polymer according to any one of the previous claims, comprising at least 5 mol.%, preferably at least 20 mol%, more preferably at least 40 mol%, even more preferably at least 60 mol% of recurring units of formula (I), and/or at most 10 mol.%, preferably at most 5 mol%, more preferably at most 1 mol%, of recurring units of formula (II), based on the total number of moles of recurring units in the PAI polymer.

5. The PAI polymer according to any one of the previous claims, further comprising recurring units according any of formulae (V) and (VI): 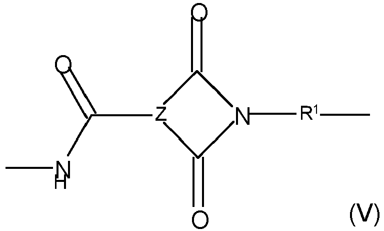 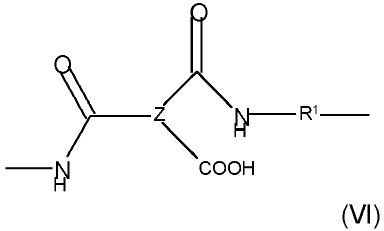 wherein R¹ is a divalent aliphatic hydrocarbon radical, preferably comprising from 2 to 18 carbon atoms, preferably from 4 to 12 carbon atoms, more preferably from 6 to 10 carbon atoms, said aliphatic hydrocarbon radical including straight or branched hydrocarbon chains.

6. The PAI polymer according to any one of the previous claims, wherein said recurring units of formula (I) have formula (Ia): 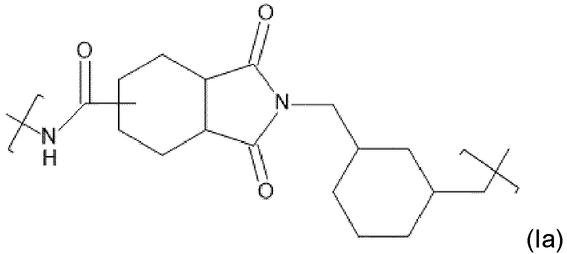 and said recurring units of formula (II) have formula (IIa):

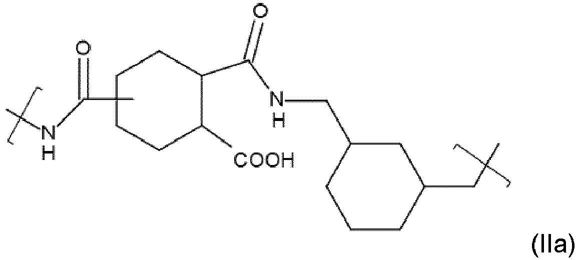

7. The PAI polymer according to any one of the previous claims, having a glass transition temperature (Tg) of:
- at least 100°C, preferably at least 120°C, more preferably at least 140°C, even more preferably at least 150°C, and/or
- at most 250°C, preferably at most 240°C, more preferably at most 230°C, even more preferably at most 220°C,
as determined by DSC according to ASTM D3418.

8. The PAI polymer according to any one of the previous claims, the PAI polymer being soluble in hexafluoro-2-propanol, o-cresol, sulfuric acid 98%, dimethylformamide.

9. A process for preparing the PAI polymer according to any one of the previous claims, said process comprising reacting:
a) at least one cycloaliphatic acid component according to any of formulae (IX) and (X): 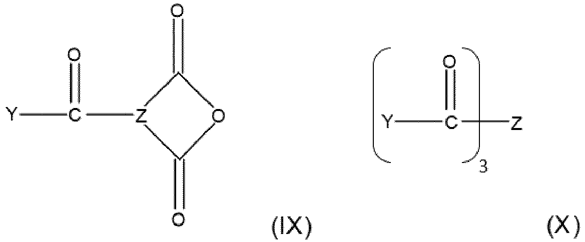 wherein:
- Z is a cycloaliphatic moiety selected from the group consisting of substituted or unsubstituted, monocyclic or polycyclic groups having 5 to 50 carbon atoms, preferably 6 to 18 carbon atoms;
- Y is ORₐ, with Rₐ being H or an alkyl, preferably an alkyl having 1 to 5 carbon atoms, and
- at least two Y(C=O) are attached to 2 adjacent carbon atoms of Z in formula (X), and
b) at least one cycloaliphatic diamine according to formula (XI):
H₂N-(CH₂)ₘ-R-(CH₂)ₙ-NH₂ (XI)
wherein:
- R is a divalent cycloaliphatic moiety selected from the group consisting of substituted or unsubstituted, monocyclic or polycyclic groups having 5 to 50 carbon atoms, preferably 6 to 20 carbon atoms, and
- m and n are, independently from each other, integers from 0 to 10, preferably from 1 to 5, more preferably from 1 to 3.

10. The process according to claim 9, wherein Z comprises from one to four aliphatic rings, said aliphatic rings being condensed or bridged together either directly or by the following bridges: -O-,-CH₂-, -C(CH₃)₂-, -C(CF₃)₂-, - (CF₂)_{q}-, with q being an integer from 1 to 5;
preferably Z is a trivalent cycloaliphatic moiety selected from the group consisting of moieties having formulae (III-A) to (III-D): 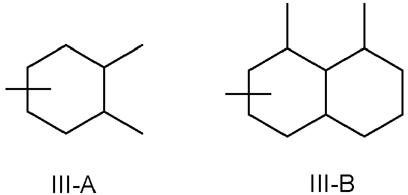 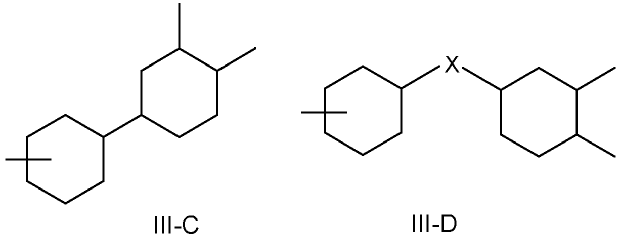
with X being -O-,-CH₂-, -C(CH₃)₂-, -C(CF₃)₂-, -(CF₂)_{q}-, with q being an integer from 1 to 5,
preferably said at least one cycloaliphatic acid component is according to formula (IXa) and/or (Xa):

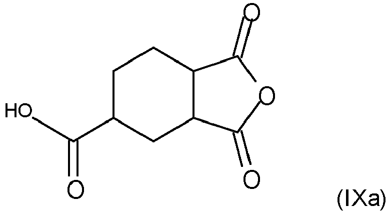

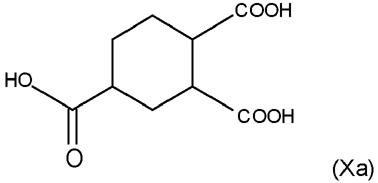

11. The process according to claim 9 or 10, wherein R comprises from one to four aliphatic rings, said aliphatic rings being condensed or bridged together either directly or by the following bridges: -O-,-S-,-SO₂-,-CH₂-,-C(CF₃)₂-, -(CF₂)_{q}-, with q being an integer from 1 to 5,
preferably R is selected from the group consisting of moieties having formulae (IV-A) to (IV-C): 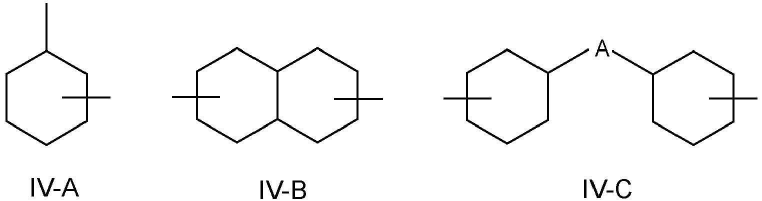
with A being selected from the group consisting of -O-, -S-, -SO₂-, CH₂-, - C(CF₃)₂-, - (CF₂)_{q}-, with q being an integer from 1 to 5,
preferably said at least one cycloaliphatic diamine is selected from the group consisting of 1,3-bis(aminomethyl)cyclohexane, 1,4-bis(aminomethyl)cyclohexane, isophorone diamine, 1,4-diaminocyclohexane, 1,3-diaminocyclohexane, 4,4'-methylenebis(cyclohexylamine), 4,4'-methylene-bis(2-methylcyclohexylamine).

12. The process according to any one of claims 9 to 11, wherein the reaction mixture further comprises at least one aliphatic diamine of formula (XII): H₂N-R¹-NH₂ (XII)
wherein R¹ is a divalent aliphatic hydrocarbon radical, preferably comprising from 2 to 18 carbon atoms, preferably from 4 to 12 carbon atoms, more preferably from 6 to 10 carbon atoms, said aliphatic hydrocarbon radical including straight or branched hydrocarbon chains,
preferably said at least one aliphatic diamine is selected from the group consisting of putrescine, cadaverine, hexamethylenediamine, 2,2,4-trimethylhexamethylenediamine, 2,4,4-trimethylhexamethylenediamine, 1,9-diaminononane, 2-methyl-1,8-diaminooctane, dodecamethylenediamine.

13. The process according to any one of claims 9 to 12, comprising reacting said at least one cycloaliphatic acid component and said at least one cycloaliphatic diamine by melt polymerization, said process further comprising a step of maintaining the reaction mixture in a state of uniform liquid during melt polymerization at a temperature of at least 200°C.

14. The process according to claim 13, said process being carried out in the absence of added water or in the presence of an amount of added water less than 50 wt.%, based on the total weight of the reaction mixture.

15. A polymer composition comprising the PAI polymer of any one of claims 1 to 8.

16. An article comprising the PAI polymer of any one of claims 1 to 8 or the polymer composition of claim 15.

## Patentansprüche

1. Polyamidimid(PAI)-Polymer, umfassend Wiederholungseinheiten gemäß einer der Formeln (I) und (II): 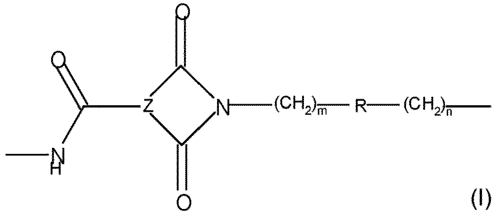 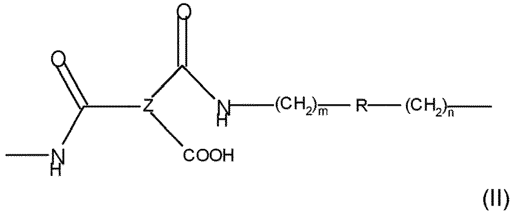 wobei:
- Z eine cycloaliphatische Einheit ausgewählt aus der Gruppe bestehend aus substituierten oder unsubstituierten, monocyclischen oder polycyclischen Gruppen mit 5 bis 50 Kohlenstoffatomen, vorzugsweise 6 bis 18 Kohlenstoffatomen, ist;
- R eine zweiwertige cycloaliphatische Einheit ausgewählt aus der Gruppe bestehend aus substituierten oder unsubstituierten, monocyclischen oder polycyclischen Gruppen mit 5 bis 50 Kohlenstoffatomen, vorzugsweise 6 bis 20 Kohlenstoffatomen, ist; und
- m und n unabhängig voneinander ganze Zahlen von 0 bis 10 sind, vorzugsweise von 1 bis 5, bevorzugter von 1 bis 3.

2. PAI-Polymer gemäß Anspruch 1, wobei Z von einem bis vier aliphatische Ringe umfasst, wobei die aliphatischen Ringe kondensiert oder entweder direkt oder durch die folgenden Brücken: -O-, -CH₂-, -C(CH₃)₂-, -C(CF₃)₂-, -(CF₂)_{q}-miteinander verbrückt sind, wobei q eine ganze Zahl von 1 bis 5 ist, wobei Z vorzugsweise ausgewählt ist aus der Gruppe bestehend aus Einheiten mit Formeln (III-A) bis (III-D): 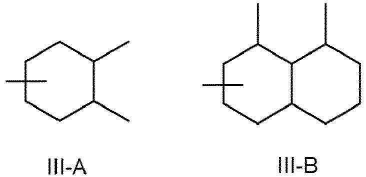 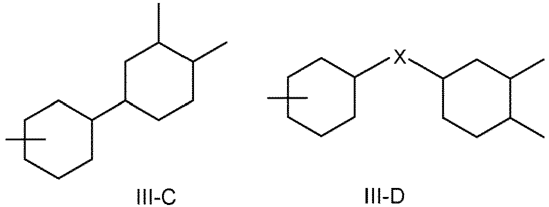 wobei X ausgewählt ist aus der Gruppe bestehend aus: -O-, -CH₂-, -C(CH₃)₂-, -C(CF₃)₂-, -(CF₂)_{q}-, wobei q eine ganze Zahl von 1 bis 5 ist.

3. PAI-Polymer gemäß einem der vorstehenden Ansprüche, wobei R von einem bis vier aliphatische Ringe umfasst, wobei die aliphatischen Ringe kondensiert oder entweder direkt oder durch die folgenden Brücken: -O-, -S-, -SO₂-, -CH₂-, -C(CF₃)₂-, -(CF₂)_{q}- miteinander verbrückt sind, wobei q eine ganze Zahl von 1 bis 5 ist, wobei R vorzugsweise ausgewählt ist aus der Gruppe bestehend aus Einheiten mit Formeln (IV-A) bis (IV-C): 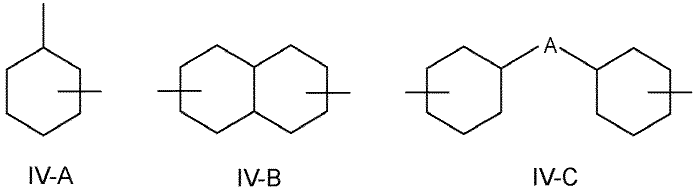 wobei A ausgewählt ist aus der Gruppe bestehend aus -O-, -S-, -SO₂-, -CH₂-, -C(CF₃) ₂-, -(CF₂)_{q}-, wobei q eine ganze Zahl von 1 bis 5 ist.

4. PAI-Polymer gemäß einem der vorstehenden Ansprüche, umfassend wenigstens 5 mol-%, vorzugsweise wenigstens 20 mol-%, bevorzugter wenigstens 40 mol-%, noch bevorzugter wenigstens 60 mol-%, an Wiederholungseinheiten der Formel (I) und/oder höchstens 10 mol-%, vorzugsweise höchstens 5 mol-%, bevorzugter höchstens 1 mol-%, an Wiederholungseinheiten der Formel (II), bezogen auf die Gesamtmolzahl an Wiederholungseinheiten in dem PAI-Polymer.

5. PAI-Polymer gemäß einem der vorstehenden Ansprüche, ferner umfassend Wiederholungseinheiten gemäß einer der Formeln (V) und (VI): 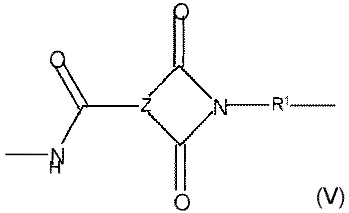 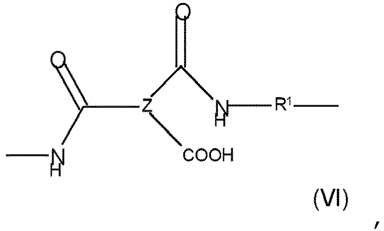 wobei R¹ ein zweiwertiger aliphatischer Kohlenwasserstoffrest ist, vorzugsweise umfassend von 2 bis 18 Kohlenstoffatome, vorzugsweise von 4 bis 12 Kohlenstoffatome, bevorzugter von 6 bis 10 Kohlenstoffatome, wobei der aliphatische Kohlenwasserstoffrest gerade oder verzweigte Kohlenwasserstoffketten enthält.

6. PAI-Polymer gemäß einem der vorstehenden Ansprüche, wobei die Wiederholungseinheiten der Formel (I) die Formel (Ia) aufweisen: 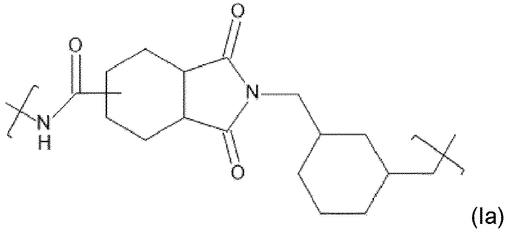 und die Wiederholungseinheiten der Formel (II) die Formel (IIa) aufweisen:

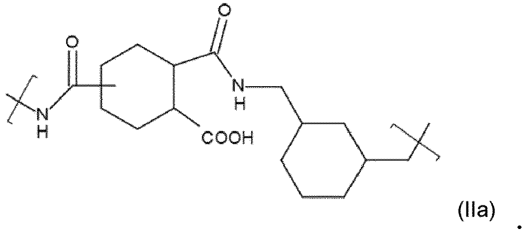

7. PAI-Polymer gemäß einem der vorstehenden Ansprüche mit einer Glasübergangstemperatur (Tg) von:
- wenigstens 100 °C, vorzugsweise wenigstens 120 °C, bevorzugter wenigstens 140 °C, noch bevorzugter wenigstens 150 °C und/oder
- höchstens 250 °C, vorzugsweise höchstens 240 °C, bevorzugter höchstens 230 °C, noch bevorzugter höchstens 220 °C,
wie bestimmt durch DSC gemäß ASTM D3418.

8. PAI-Polymer gemäß einem der vorstehenden Ansprüche, wobei das PAI-Polymer in Hexafluor-2-propanol, o-Cresol, 98 % Schwefelsäure, Dimethylformamid löslich ist.

9. Verfahren zur Herstellung des PAI-Polymers gemäß einem der vorstehenden Ansprüche, wobei das Verfahren Umsetzen von:
a) wenigstens einer cycloaliphatischen Säurekomponente gemäß einer der Formeln (IX) und (X): 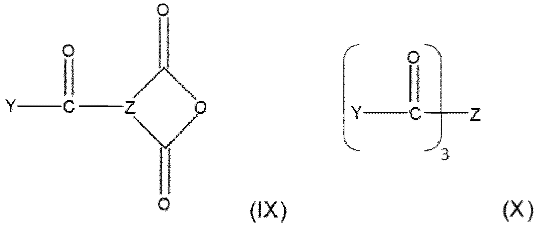 wobei:
- Z eine cycloaliphatische Einheit ausgewählt aus der Gruppe bestehend aus substituierten oder unsubstituierten, monocyclischen oder polycyclischen Gruppen mit 5 bis 50 Kohlenstoffatomen, vorzugsweise 6 bis 18 Kohlenstoffatomen, ist;
- Y ORₐ ist, wobei Rₐ H oder ein Alkyl ist, vorzugsweise ein Alkyl mit 1 bis 5 Kohlenstoffatomen; und
- wenigstens zwei Y(C=O) an 2 benachbarte Kohlenstoffatome von Z in der Formel (X) gebunden sind, und
b) wenigstens einem cycloaliphatischen Diamin gemäß Formel (XI):
H₂N-(CH₂)ₘ-R-(CH₂)ₙ-NH₂ (XI)
wobei:
- R eine zweiwertige cycloaliphatische Einheit ausgewählt aus der Gruppe bestehend aus substituierten oder unsubstituierten, monocyclischen oder polycyclischen Gruppen mit 5 bis 50 Kohlenstoffatomen, vorzugsweise 6 bis 20 Kohlenstoffatomen, ist; und
- m und n unabhängig voneinander ganze Zahlen von 0 bis 10 sind, vorzugsweise von 1 bis 5, bevorzugter von 1 bis 3,
umfasst.

10. Verfahren gemäß Anspruch 9, wobei Z von einem bis vier aliphatische Ringe umfasst, wobei die aliphatischen Ringe kondensiert oder entweder direkt oder durch die folgenden Brücken: -O-, -CH₂-, -C(CH₃)₂-, -C(CF₃)₂-, -(CF₂)_{q}-miteinander verbrückt sind, wobei q eine ganze Zahl von 1 bis 5 ist;
wobei Z vorzugsweise eine dreiwertige cycloaliphatische Einheit ausgewählt aus der Gruppe bestehend aus Einheiten mit Formeln (III-A) bis (III-D) ist: 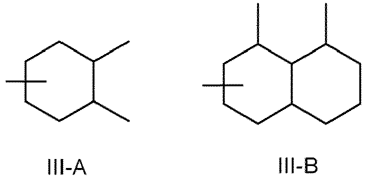 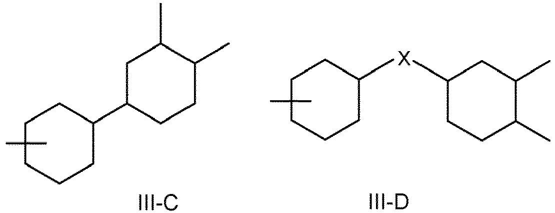 wobei X -O-, -CH₂-, -C(CH₃)₂-, -C(CF₃)₂-, -(CF₂)_{q}- ist, wobei q eine ganze Zahl von 1 bis 5 ist,
wobei die wenigstens eine cycloaliphatische Säurekomponente gemäß Formel (IXa) und/oder (Xa) ist:

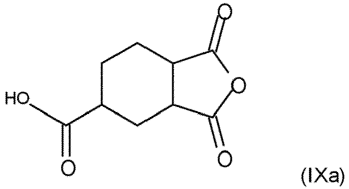

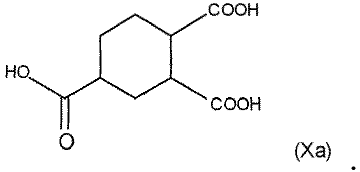

11. Verfahren gemäß Anspruch 9 oder 10, wobei R von einem bis vier aliphatische Ringe umfasst, wobei die aliphatischen Ringe kondensiert oder entweder direkt oder durch die folgenden Brücken: -O-, -S-, -SO₂-, -CH₂-, -C(CF₃)₂-, -(CF₂)_{q}- miteinander verbrückt sind, wobei q eine ganze Zahl von 1 bis 5 ist,
wobei R vorzugsweise ausgewählt ist aus der Gruppe bestehend aus Einheiten mit Formeln (IV-A) bis (IV-C): 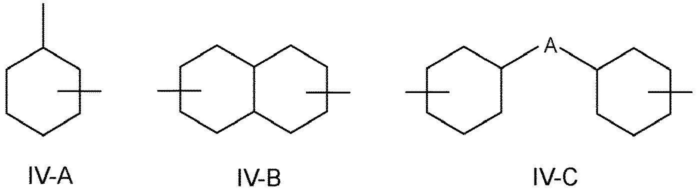 wobei A ausgewählt ist aus der Gruppe bestehend aus -O-, -S-, -SO₂-, -CH₂-, -C(CF₃)₂-, -(CF₂)_{q}-, wobei q eine ganze Zahl von 1 bis 5 ist,
wobei das wenigstens eine cycloaliphatische Diamin vorzugsweise ausgewählt ist aus der Gruppe bestehend aus 1,3-Bis(aminomethyl)cyclohexan, 1,4-Bis(aminomethyl)cyclohexan, Isophorondiamin, 1,4-Diaminocyclohexan, 1,3-Diaminocyclohexan, 4,4'-Methylenbis(cyclohexylamin), 4,4'-Methylenbis(2-methylcyclohexylamin).

12. Verfahren gemäß einem der Ansprüche 9 bis 11, wobei das Reaktionsgemisch ferner wenigstens ein aliphatisches Diamin der Formel (XII) umfasst:
H₂N-R¹-NH₂ (XII),
wobei R¹ ein zweiwertiger aliphatischer Kohlenwasserstoffrest ist, vorzugsweise umfassend von 2 bis 18 Kohlenstoffatome, vorzugsweise von 4 bis 12 Kohlenstoffatome, bevorzugter von 6 bis 10 Kohlenstoffatome, wobei der aliphatische Kohlenwasserstoffrest gerade oder verzweigte Kohlenwasserstoffketten enthält,
wobei das wenigstens eine aliphatische Diamin vorzugsweise ausgewählt ist aus der Gruppe bestehend aus Putrescin, Cadaverin, Hexamethylendiamin, 2,2,4-Trimethylhexamethylendiamin, 2,4,4-Trimethylhexamethylendiamin, 1,9-Diaminononan, 2-Methyl-1,8-diaminooctan, Dodecamethylendiamin.

13. Verfahren gemäß einem der Ansprüche 9 bis 12, umfassend Umsetzen der wenigstens einen cycloaliphatischen Säurekomponente und des wenigstens einen cycloaliphatischen Diamins durch Schmelzpolymerisation, wobei das Verfahren ferner einen Schritt des Haltens des Reaktionsgemischs in einem Zustand von gleichförmiger Flüssigkeit während der Schmelzpolymerisation bei einer Temperatur von wenigstens 200 °C umfasst.

14. Verfahren gemäß Anspruch 13, wobei das Verfahren ohne Vorhandensein von zugegebenem Wasser oder in Gegenwart von weniger als 50 Gew.-% an zugegebenem Wasser, bezogen auf das Gesamtgewicht des Reaktionsgemischs, durchgeführt wird.

15. Polymerzusammensetzung, umfassend das PAI-Polymer gemäß einem der Ansprüche 1 bis 8.

16. Gegenstand, umfassend das PAI-Polymer gemäß einem der Ansprüche 1 bis 8 oder die Polymerzusammensetzung gemäß Anspruch 15.

## Revendications

1. Polymère de type polyamide-imide (PAI) comprenant des motifs répétitifs selon l'une quelconque des formules (I) et (II) : 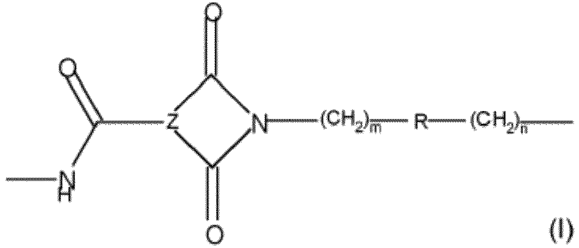 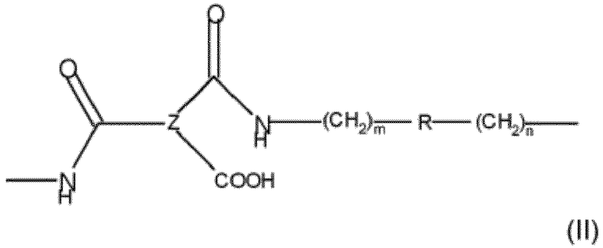
- Z étant un groupement cycloaliphatique choisi dans le groupe constitué par des groupes substitués ou non substitués, monocycliques ou polycycliques ayant 5 à 50 atomes de carbone, préférablement 6 à 18 atomes de carbone ;
- R étant un groupement cycloaliphatique divalent choisi dans le groupe constitué par des groupes substitués ou non substitués, monocycliques ou polycycliques ayant 5 à 50 atomes de carbone, préférablement 6 à 20 atomes de carbone, et
- m et n étant, indépendamment l'un de l'autre, des entiers de 0 à 10, préférablement de 1 à 5, plus préférablement de 1 à 3.

2. Polymère de type PAI selon la revendication 1, Z comprenant un à quatre cycles aliphatiques, lesdits cycles aliphatiques étant condensés ou pontés ensemble soit directement, soit par les ponts suivants : -O-, -CH₂-, -C(CH₃)₂-, -C(CF₃)₂-, -(CF₂)_{q}-,
q étant un entier de 1 à 5, préférablement Z étant choisi dans le groupe constitué par des groupements ayant les formules (III-A) à (III-D) : 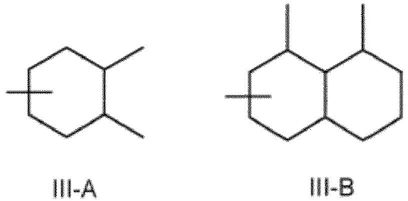 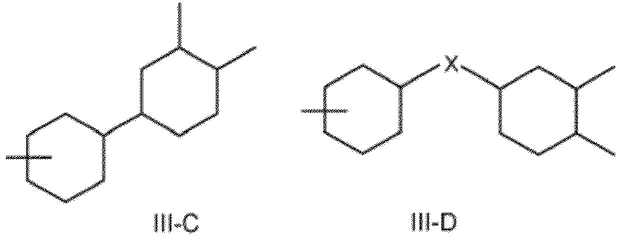
X étant choisi dans le groupe constitué par : -O-, -CH₂-, -C(CH₃)₂-, -C(CF₃)₂-, -(CF₂)q-, q étant un entier de 1 à 5.

3. Polymère de type PAI selon l'une quelconque des revendications précédentes, R comprenant un à quatre cycles cycloaliphatiques, lesdits cycles cycloaliphatiques étant condensés ou pontés ensemble soit directement, soit par les ponts suivants : -O-, -S-, -SO₂- -CH₂-, -C(CF₃)₂-, -(CF₂)_{q}-,
q étant un entier de 1 à 5, R étant choisi dans le groupe constitué par des groupements ayant les formules (IV-A) à (IV-C) : 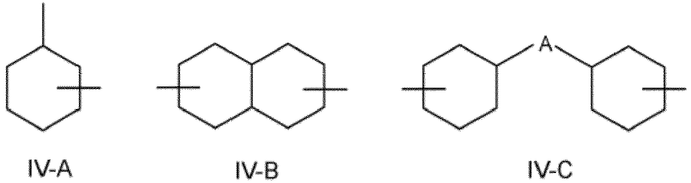
A étant choisi dans le groupe constitué par -O-, - S-, -SO₂- -CH₂-, -C(CF₃)₂-, -(CF₂)_{q}-, q étant un entier de 1 à 5.

4. Polymère de type PAI selon l'une quelconque des revendications précédentes, comprenant au moins 5 % en moles, préférablement au moins 20 % en moles, plus préférablement au moins 40 % en moles, encore plus préférablement au moins 60 % en moles de motifs répétitifs de formule (I), et/ou au plus 10 % en moles, préférablement au plus 5 % en moles, plus préférablement au plus 1 % en moles, de motifs répétitifs de formule (II), sur la base du nombre total de moles de motifs répétitifs dans le polymère de type PAI.

5. Polymère de type PAI selon l'une quelconque des revendications précédentes, comprenant en outre des motifs répétitifs selon l'une quelconque des formules (V) et (VI) : 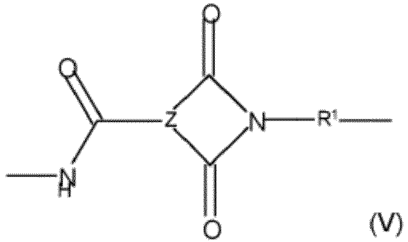 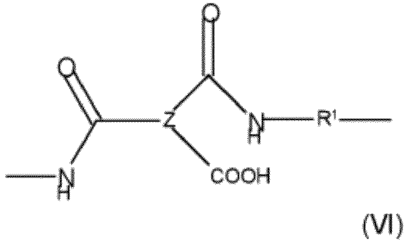 R¹ étant un radical hydrocarboné aliphatique divalent, préférablement comprenant de 2 à 18 atomes de carbone, préférablement de 4 à 12 atomes de carbone, plus préférablement de 6 à 10 atomes de carbone, ledit radical hydrocarboné aliphatique comprenant des chaînes hydrocarbonées linéaires ou ramifiées.

6. Polymère de type PAI selon l'une quelconque des revendications précédentes, lesdits motifs répétitifs de formule (I) ayant la formule (Ia) : 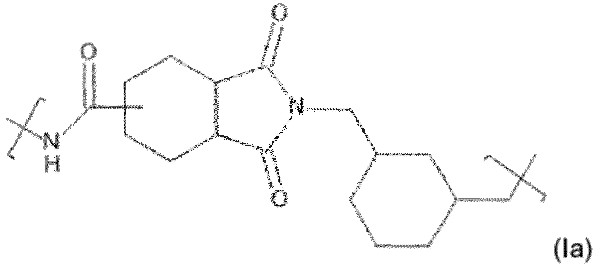 et lesdits motifs répétitifs de formule (II) ayant la formule (IIa) :

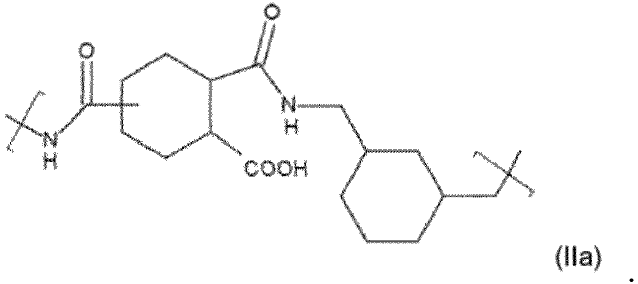

7. Polymère de type PAI selon l'une quelconque des revendications précédentes, ayant une température de transition vitreuse (Tg) de :
- au moins 100 °C, préférablement au moins 120 °C, plus préférablement au moins 140 °C, encore plus préférablement au moins 150 °C, et/ou
- au plus 250 °C, préférablement au plus 240 °C, plus préférablement au plus 230 °C, encore plus préférablement au plus 220 °C,
comme déterminé par DSC selon la norme ASTM D3418.

8. Polymère de type PAI selon l'une quelconque des revendications précédentes, le polymère de type PAI étant soluble dans l'hexafluoro-2-propanol, l'o-crésol, l'acide sulfurique à 98 %, le diméthylformamide.

9. Procédé pour la préparation du polymère de type PAI selon l'une quelconque des revendications précédentes, ledit procédé comprenant la mise en réaction :
a) d'au moins un composant de type acide cycloaliphatique selon l'une quelconque des formules (IX) et (X) : 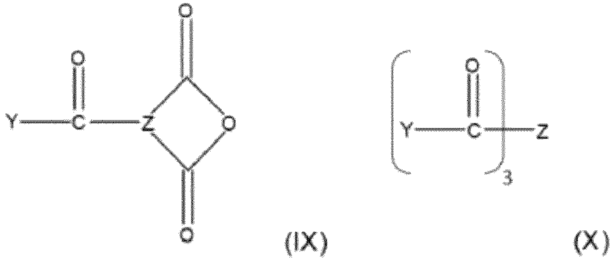
- Z étant un groupement cycloaliphatique choisi dans le groupe constitué par des groupes substitués ou non substitués, monocycliques ou polycycliques ayant 5 à 50 atomes de carbone, préférablement 6 à 18 atomes de carbone ;
- Y étant ORₐ, Rₐ étant H ou un alkyle, préférablement un alkyle ayant 1 à 5 atomes de carbone, et
- au moins deux Y(C=O) étant fixés à 2 atomes de carbone adjacents de Z dans la formule (X), et b) au moins une diamine cycloaliphatique selon la formule (XI) :
H₂N-(CH₂)ₘ-R-(CH₂)ₙ-NH₂ (XI)
- R étant un groupement cycloaliphatique divalent choisi dans le groupe constitué par des groupes substitués ou non substitués, monocycliques ou polycycliques ayant 5 à 50 atomes de carbone, préférablement 6 à 20 atomes de carbone, et
- m et n étant, indépendamment l'un de l'autre, des entiers de 0 à 10, préférablement de 1 à 5, plus préférablement de 1 à 3.

10. Procédé selon la revendication 9, Z comprenant un à quatre cycles aliphatiques, lesdits cycles aliphatiques étant condensés ou pontés ensemble soit directement, soit par les ponts suivants : -O-, - CH₂-, -C(CH₃)₂-, -C(CF₃)₂-, -(CF₂)q-, q étant un entier de 1 à 5 ;
préférablement Z étant un groupement cycloaliphatique trivalent choisi dans le groupe constitué par des groupements ayant les formules (III-A) à (III-D) : 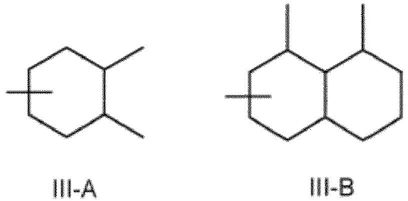 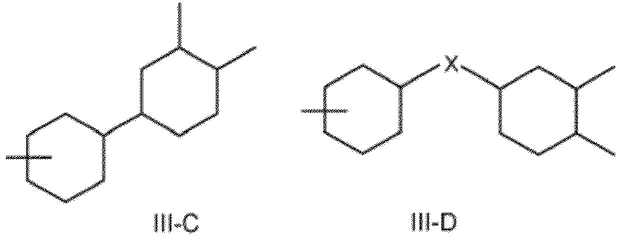
X étant -O-, -CH₂-, -C(CH₃)₂-, -C(CF₃)₂-, -(CF₂)q-, q étant un entier de 1 à 5,
préférablement ledit au moins un composant de type acide cycloaliphatique étant selon la formule (IXa) et/ou (Xa) :

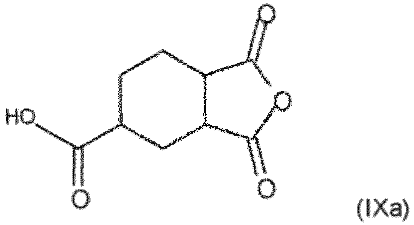

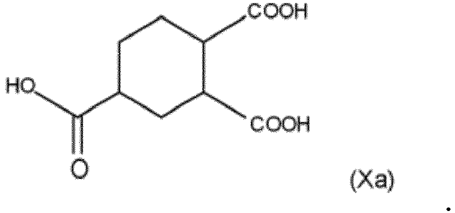

11. Procédé selon la revendication 9 ou 10, R comprenant un à quatre cycles cycloaliphatiques, lesdits cycles cycloaliphatiques étant condensés ou pontés ensemble soit directement, soit par les ponts suivants : -O-, -S-, -SO₂- -CH₂-, -C(CF₃)₂-, -(CF₂)_{q}-,
q étant un entier de 1 à 5,
préférablement R étant choisi dans le groupe constitué par des groupements ayant les formules (IV-A) à (IV-C) : 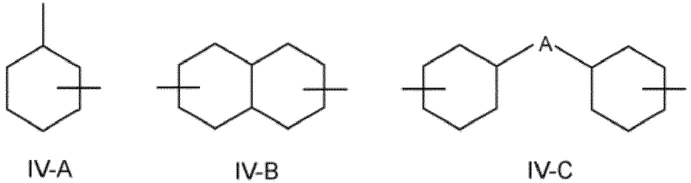
A étant choisi dans le groupe constitué par -O-, - S-, -SO₂- -CH₂-, -C(CF₃)₂-, -(CF₂)_{q}-, q étant un entier de 1 à 5,
préférablement ladite au moins une diamine cycloaliphatique étant choisie dans le groupe constitué par le
1,3-bis(aminométhyl)cyclohexane, le 1,4-bis(aminométhyl)cyclohexane, l'isophoronediamine, le 1,4-diaminocyclohexane, le 1,3-diaminocyclohexane, la 4,4'-méthylènebis(cyclohexylamine), la 4,4'-méthylène-bis(2-méthylcyclohexylamine).

12. Procédé selon l'une quelconque des revendications 9 à 11, le mélange réactionnel comprenant en outre au moins une diamine aliphatique de formule (XII) :
H₂N-R¹-NH₂ (XII),
R¹ étant un radical hydrocarboné aliphatique divalent, préférablement comprenant de 2 à 18 atomes de carbone, préférablement de 4 à 12 atomes de carbone, plus préférablement de 6 à 10 atomes de carbone, ledit radical hydrocarboné aliphatique comprenant des chaînes hydrocarbonées linéaires ou ramifiées,
préférablement ladite au moins une diamine aliphatique étant choisie dans le groupe constitué par la putrescine, la cadavérine, l'hexaméthylènediamine, la 2,2,4-triméthylhexaméthylènediamine, la 2,4,4-triméthylhexaméthylènediamine, le 1,9-diaminononane, le 2-méthyl-1,8-diaminooctane, la dodécaméthylènediamine.

13. Procédé selon l'une quelconque des revendications 9 à 12, comprenant la mise en réaction dudit au moins un composant de type acide cycloaliphatique et de ladite au moins une diamine cycloaliphatique par polymérisation en fusion, ledit procédé comprenant en outre une étape de maintien du mélange réactionnel dans un état de liquide uniforme pendant la polymérisation en fusion à une température d'au moins 200 °C.

14. Procédé selon la revendication 13, ledit procédé étant mis en œuvre en l'absence d'eau ajoutée ou en la présence d'une quantité d'eau ajoutée inférieure à 50 % en poids, sur la base du poids total du mélange réactionnel.

15. Composition de polymère comprenant le polymère de type PAI selon l'une quelconque des revendications 1 à 8.

16. Article comprenant le polymère de type PAI selon l'une quelconque des revendications 1 à 8 ou la composition de polymère selon la revendication 15.
